# EUROPEAN PATENT APPLICATION

(11) **EP 4 230 410 A1**
(43) Date of publication of application: **23.08.2023**
(21) Application number: 22157932.9
(22) Date of filing: 22.02.2022
(51) Int. Cl.: B32B 27/20, B32B 27/32

(54) **MACHINE DIRECTION ORIENTED PACKAGING FILM WITH CAVITIES**

(71) Applicant: RKW SE, 68309 Mannheim (DE)
(72) Inventor: DEMBOWSKI, Adrien, 68309 Mannheim (DE); SPICKER, Claudia, 68309 Mannheim (DE); MAIER, Leonhard, 83547 Babensham (DE); HERMANS, Luc, 68309 Mannheim (DE); QUIROZ, Juan Pablo, 68309 Mannheim (DE); WYPELIER, Frederic, 68309 Mannheim (DE); NONIEWICZ, Konrad, 68309 Mannheim (DE); STROH, Thomas, 68309 Mannheim (DE); BENDER, Claudia, 68309 Mannheim (DE); SCHWEITZER, Christoph, 68309 Mannheim (DE)
(74) Representative: Busch, Tobias

(57) **Abstract**

The invention relates to a recyclable packaging with a print (4) and a laminate (1) made of a largely pure polyolefin. The laminate (1) has at least one carrier layer (2) and at least one film (3) which is stretched monoaxially in the machine direction and has at least two layers (5, 6). At least one cavitated layer (6) has an inorganic filler for producing cavities in the layer.

## Description

The invention relates to recyclable packaging with a print and a laminate made from a largely unmixed polyolefin, which has at least one carrier layer and at least one film stretched monoaxially in the machine direction and having at least two layers.

The recyclable packaging can be used for both food and non-food packaging.

Packaging is important for the protection and shelf life of food. The range of different packaging is large and ranges from paper packaging, glass and metal packaging and composite packaging to plastic packaging.

The properties of low mass, resistance and longevity favor plastics as packaging material for food. In particular, packaging based on polyethylene (PE) and polypropylene (PP) has proven to be ecologically advantageous because it can be recycled particularly well.

At the same time, the way plastic is currently produced and disposed of can also be harmful to the environment. The consequences range from high CO₂ emissions to ocean pollution. To counteract this, the European Union wants to reduce landfilling of plastic waste as part of its Green Deal. By 2030, 55 % of plastic packaging waste should be recycled.

The term "mechanical recycling" refers to the processing of plastic waste into secondary raw materials or products in which the chemical compounds of the plastic are not broken down. The waste is mechanically crushed and melted by an extruder. Plastic granulate is then produced again in the same process. This form of recycling is particularly useful for relatively clean plastic type waste streams.

In principle, all thermoplastics can be mechanically recycled with little or no loss of quality. However, plastic waste is often a contaminated mix of materials. Because the recycled plastic can contain impurities, the quality of the end product ultimately decreases. For this reason, strict rules apply to the use of granules, e.g. in food packaging

Of course, there are also challenges for recycling. The plastic streams consist of a "mix" of materials, often with a high level of contamination. The effort involved in collecting, sorting, washing and recycling and the high percentage of material wasted result in high costs and result in a raw material of limited quality. This makes it commercially unattractive to use the recycled raw materials from these streams in new products.

The focus is therefore also on a more sustainable product design, such as the use of more mono-materials, better separation at source and further technical developments around automatic sorting and deinking, which will make mechanical recycling of these waste streams more attractive.

Now that many European countries have signed the European Plastics Pact, this could improve in the near future. According to this pact, by 2025 all packaging and single-use plastics must be designed to be reusable or recyclable.

The outer layer of food packaging is usually referred to as a carrier layer. This gives the consumer an impression of the quality of the packaged food with its haptics and its appearance.

In order to mark the food packaging or non-food packaging and to create the visual impression of the packaging, the film is usually provided with a print or imprint.

A frequently used method for applying a print to the food packaging is flexographic printing. This is a direct letterpress process, also referred to as a web-fed rotary printing process. The flexible printing plates, made of photopolymer or rubber, are used in combination with low-viscosity inks. The raised areas of the printing form carry the image.

A film is usually understood to mean a multi-layer and one-piece arrangement that is produced by means of extrusion. The film should have the properties that are necessary for the safe and durable packaging of food.

The term laminate refers to the bonding of a film and a backing sheet into one unit. The print can be arranged between the carrier layer and the film.

The object of the present invention is to provide food packaging or non-food packaging that meets the requirements of the Plastics Pact 2025 and is fully recyclable. The packaging should be designed to be very stiff and transparent. The layers of the packaging should be easy to seal and the food packaging should not show any shrinkage. The packaging should be harmless to health and ecologically sustainable. In addition, no odors should emanate from the packaging. Furthermore, the food packaging or non-food packaging should have a pleasant feel.

According to the invention, this object is achieved by a recyclable packaging, a method and a use according to the independent main claims. Preferred variants can be found in the dependent claims, the description, the exemplary embodiment and the drawings.

According to the invention, at least one cavitated layer has an inorganic filler to produce cavities in the layer.

A cavity, abstractly speaking, is an empty or gas-filled space inside something solid. The room is thus surrounded by a fixed boundary that separates the room from the outside. In the case of a polymer film, the space is delimited from the outside by polymeric material.

A cavity and/or a large number of cavities and/or all cavities of the layer can preferably be designed in the form of vacuoles.

The inorganic, solid filler serves to form these cavities or vacuoles, which leads to the formation of the same through monoaxial stretching after extrusion.

In a particularly favorable variant of the invention, the cavitated layer is designed as an inner layer. The inner layer is preferably surrounded by two uncavitated layers. This creates a three-layer film in the most minimalist version.

The surrounding of the cavitated layer by uncavitated layers ensures the enclosure as well as the closure of the cavities to the outside. This ensures that no cavity has a direct and/or indirect connection to the outside.

In further variants of the invention, the cavitated layer can be surrounded by a plurality of uncavitated layers, with a symmetrical film structure preferably being implemented. Da means that the cavitated layer is surrounded on both sides by the same number of uncavitated layers. This preferably results in a five-layer or a seven-layer or a nine-layer film.

The density of the film is less than 0.99 g/cm³, preferably less than 0.98 g/cm³, in particular less than 0.97 g/cm³ and/or more, in order to achieve mechanical recycling and to meet the definitions of the Plastics Pact than 0.60 g/cm³, preferably more than 0.70 g/cm³, in particular more than 0.80 g/cm³. This is achieved in particular by the monoaxial stretching of the film and the formation of cavities in the cavitated layer.

Advantageously, the formation as well as the inclusion of voids in a middle layer results in a film density that is safely below 1.00 g/cm³.

In a particularly favorable variant of the invention, the polyolefin is a polyethylene. Polyethylene (PE) is a thermoplastic produced by chain polymerisation of petrochemically produced ethene. Polyethylene is semi-crystalline and non-polar.

The packaging according to the invention can be used both for foodstuffs and for non-foodstuffs. In a particularly advantageous variant, the packaging is designed as food packaging.

Ideally, the polyolefin is exclusively polyethylene. As a result, the food packaging meets the requirements of the Plastics Pact, is based on a mono-material construction and is recyclable.

Hard and inorganic fillers are particularly suitable for the film according to the invention. The proportion of fillers is calculated in such a way that stretching only creates microporous cavities that do not have a network of connections to one another.

The filler content can be determined using known measuring methods such as incineration. A sample of known weight is heated to a temperature at which the polymer thermally decomposes but the filler does not. A temperature of 560 °C, for example, has proven itself for this purpose. The sample weight is then measured again. The polymer content per square meter can be calculated from the difference between the initial weight and the initial weight.

As an alternative to ashing, a TGA measurement is possible, in which the weight of a sample is continuously measured as it is heated. This test method can also clearly differentiate between polymer and filler and allows the polymer content of the film to be determined.

In a variant of the invention, calcium carbonate (CaCO₃) is used as the filler, preferably with a mean particle size of 1,4 µm. In a particularly advantageous variant of the invention, the particle size is less than 6.4 µm During the stretching process, the elastic polymer components of the cavitated layer are stretched and cavities are formed in the layer. In one variant of the invention, the proportion of calcium carbonate is more than 5 % by weight, preferably more than 10 % by weight, in particular more than 15 % by weight and/or less than 60 % by weight, preferably less than 50 % by weight, in particular less than 40 % by weight.

A metal oxide component can be used as a filler in addition to or as an alternative to calcium carbonate (CaCO₃). The alkaline earth metal oxides are particularly advantageous as metal oxide components, in order to ensure the formation of the pores in the layer both as a filler and at the same time as an adhesive to ensure the adhesion of the printed image. Calcium oxide (CaO) has proven particularly advantageous, although the use of magnesium oxide is also conceivable.

In addition, talc and/or titanium dioxide and/or dolomite have proven particularly useful as fillers.

In one variant of the invention, the filled layer has a proportion of titanium dioxide, the proportion being less than 5% by weight, preferably less than 4% by weight, in particular less than 3% by weight. The proportion of titanium dioxide can be seen in addition to the CaCO₃ proportion or as a total of the filler.

After stretching in the monoaxial direction, the film has a thickness of less than 60 µm, preferably less than 50 µm, in particular less than 40 µm and/or more than 10 µm, preferably more than 20 µm, in particular more than 30 µm.

Ideally, the film is particularly thin and material-saving. The construction of the film thus corresponds to the construction specifications from the plastic pact. Nevertheless, due to the special manufacturing process, the film has excellent properties that make it ideal for food packaging.

In an advantageous variant of the invention, the film has a gas permeability of less than 500 cm³/m² · d · bar, preferably less than 300 cm³/m² · d · bar, in particular less than 100 cm³/m² · d · bar according to DIN EN ISO 2556. DIN EN ISO 2556:2000 is the German version for determining the gas permeability of foils and thin sheets under atmospheric pressure using the pressure gauge method (ISO 2556:1974).

In a highly advantageous embodiment of the invention, the food packaging film does not include titanium dioxide to create opacity. This design variant particularly meets the demands of environmental and health protection.

Opacity is the opposite of transparency. It is a measure of opacity or opacity in percent. In particular, the opacity of a completely opaque film is 100 % and a completely or completely transparent film has an opacity of 0 %.

According to the invention, the method of manufacturing a laminate for food packaging or non-food packaging comprises several steps. First, the polymeric components are mixed, which is then extruded into a film with at least two layers. The polymer mixtures differ in terms of the cavitated and the uncavitated layer of the film, with the polymer mixture of the cavitated layer having an inorganic filler to create cavities. Advantageously, the film is stretched monoaxially in the machine direction, as a result of which the favorable properties of the PE film are achieved. Among other things, this is an advantageous opacity, so that the foil can be provided with a print directly. The printed film can then preferably be sealed to the carrier layer to form a laminate.

The film is produced by monoaxial stretching with a machine direction orientation (MDO) by heating the polymeric film to a temperature slightly below its melting point and stretching it in a specific orientation. Stretching can also occur directly after extrusion, where the film is still at a temperature slightly below its melting point.

The MDO stretched and oriented PE film enables food packaging to be based on a particularly thin film as well as a uniform, single material structure. MDO stretching achieves properties in the PE film that were previously only known from multi-material constructions or from PP and PET films.

Ideally, the extrusion is carried out as blow molding, which promotes the formation of advantageous film properties, such as tensile strength and sealability with a carrier layer.

Due to its special properties, the sealability of the monoaxially stretched PE film is many times better than that of known biaxially stretched PE films.

In an advantageous variant of the invention, the film is stretched by more than a factor of three, preferably more than a factor of four, in particular more than a factor of five. This gives the film an advantageous rigidity and favorable opacity.

The carrier layer is also preferably based on a mono-material construction of polyethylene.

In a particularly advantageous variant of the invention, the carrier layer is a nine-layer PE layer, preferably based on MDPE, which is also stretched monoaxially in the machine direction.

In a favorable embodiment variant, one or two outer layers of the carrier layer can have a proportion of HDPE, as a result of which better sealability can be ensured.

The film according to the invention is used as recyclable and unmixed food packaging and/or non-food packaging. The film offers the advantages of a mono-material construction while meeting and exceeding many of the characteristics of multi-component constructions and meeting the requirements of the European Union's Plastics Pact.

Further advantages and features of the invention result from the description of an exemplary embodiment based on drawings and from the drawings themselves.

### While showing

fig. 1 shows a schematic representation of the laminate according to the invention,
fig. 2 shows a further variant of the laminate according to the invention.

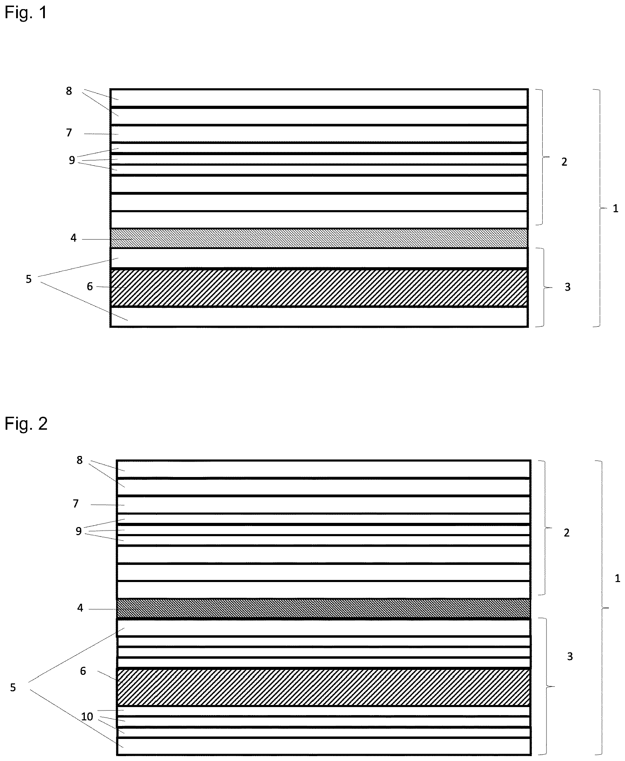

In fig. 1 a schematic structure of the laminate 1 is shown. The laminate 1 is formed from the foil 3 and the carrier layer 2 by sealing the foil 3 to the carrier layer 2.

A print 4 is arranged between the carrier layer 2 and the film 3 and is printed onto the film 3 before sealing. The print 4 is used to identify the food to be packaged and for visual recognition as well as to support a brand image of the food brand. In this embodiment variant, the carrier layer 2 is formed with nine layers. The five innermost layers 7 and 9 consist entirely of an MDPE, for example a Borealis Borshape FX1002, with the three innermost layers 9 being significantly thinner than the two surrounding layers 7.

The two outer layers 8 of the carrier layer 2 each have a proportion of HDPE in addition to the MDPE. In the embodiment variant shown, the proportion of HDPE is 85% by weight and is made, for example, from Hostalen ACP 7740 F3.

After blow extrusion, the nine-layer carrier layer 2 has a thickness of 139 µm. After monoaxial stretching by a factor of 5.95, the thickness of the carrier layer 2 is 25 µm, with a density of 0.945 g/cm³.

In the embodiment of fig. 1, the film 3 has a three-layer structure. The layer 6 is the cavitated layer, the proportion of CaCO₃ being approximately 55 % by weight. Furthermore, the layer 6 has an LDPE proportion of approximately 15 % by weight, an MDPE proportion of approximately 18 % by weight and an HDPE proportion of approximately 12 % by weight.

The layer 6 is surrounded by a layer 5 in each case, with the layer 5 having no fillers. In layer 5, the proportion of MDPE is approximately 70 % by weight and the proportion of HDPE is 30 % by weight.

After blow extrusion, the film 3 has a thickness of 140 µm. After monoaxial stretching by a factor of 4.82, the thickness of film 3 is 29 µm with a density of 0.87 g/cm³.

The variant embodiment of the food packaging shown in fig. 2 essentially corresponds to the variant embodiment in fig. 1. Only the film 3 has a nine-layer structure. In this case, three further, thin layers 10 are arranged in each case between the cavitated layer 6 and the uncavitated layer 5. The layer 10 is formed entirely of an MDPE, for example a Borealis Borshape FX1002.

## Claims

1. Recyclable packaging with a print (4) and a laminate (1) made of a largely pure polyolefin,
which has at least one carrier layer (2) and at least one film (3) stretched monoaxially in the machine direction with at least two layers (5, 6),
**characterized in that**
at least one cavitated layer (6) has an inorganic filler for producing cavities in the layer.

2. Recyclable packaging as claimed in Claim 1, **characterized in that** the cavitated layer (6) is designed as an inner layer, the inner layer being surrounded by two uncavitated layers (5).

3. Recyclable packaging as claimed in Claim 1 or 2, **characterized in that** the density of the film (3) is less than 0.99 g/cm³, preferably less than 0.98 g/cm³, in particular less than 0.97 g/cm³ and / or more than 0.60 g/cm³, preferably more than 0.70 g/cm³, in particular more than 0.80 g/cm³.

4. Recyclable packaging as claimed in any of claims 1 - 3, **characterized in that** the polyolefin is a polyethylene.

5. Recyclable packaging as claimed in any of claims 1 - 4, **characterized in that** the filler is a CaCO₃, with a particle size of less than 6.5 µm.

6. Recyclable packaging as claimed in any of claims 1 - 5, **characterized in that** the proportion of filler in the cavitated layer (6) is more than 5 % by weight, preferably more than 10 % by weight, in particular more than 15 % by weight and / or less than 60 % by weight, preferably less than 50 % by weight %, in particular less than 40 % by weight.

7. Recyclable packaging as claimed in any of claims 1 - 6, **characterized in that** the film (3) has a thickness of less than 60 µm, preferably less than 50 µm, in particular less than 40 µm and / or more than 10 µm, preferably more than 20 µm, in particular more than 30 µm.

8. Recyclable packaging as claimed in any of claims 1 - 7, **characterized in that** the film (3) has a gas permeability of less than 500 cm³/m² d bar, preferably less than 300 cm³/m² d bar, in particular less than 100 cm³/m² d bar according to DIN EN ISO 2556.

9. Method to produce a laminate (1) with the following steps:
- Creation of a mixture
- extrusion of the mixture into a film (3) with at least two layers (5, 6),
- Printing the film (3),
- Laminating the film (3) with a carrier layer (2) to form a single-variety packaging,
**characterized in that**
the film (3) is stretched monoaxially in the machine direction.

10. Method as claimed in claim 9, **characterized in that** the extrusion is carried out as a blow extrusion.

11. Method as claimed in claim 9 or 10, **characterized in that** the film (3) is stretched by more than a factor of 3, preferably more than a factor of 4, in particular more than a factor of 5.

12. Use of a film (3) according to one of claims 1 to 8 as recyclable, single-variety packaging.
